# EUROPEAN PATENT SPECIFICATION

(11) **EP 1 170 845 B1**
(45) Date of publication and mention of the grant of the patent: **11.04.2007**
(21) Application number: 01610068.7
(22) Date of filing: 03.07.2001
(51) Int. Cl.: H02G 3/14

(54) **An electrical mounting element with flap**
Elektrisches Montageelement mit Scharnierdeckel
Elément de montage électrique avec clapet

(30) Priority: 04.07.2000 DK 200001038
(43) Date of publication of application: 09.01.2002
(73) Proprietor: Schneider Nordic Baltic A/S, 2100 Copenhagen O (DK)
(72) Inventor: Larsen, Henrik Wulff, 4700 Naestved (DK)
(74) Representative: Sundien, Thomas

(56) References cited:
- DE-C- 4 125 509
- DE-U- 7 613 362
- US-A- 5 944 561

## Description

The invention relates to an electrical mounting element, such as a switch, a current tap or a communication tap, comprising a housing and a flap that is connected to the housing via a hinge connection at an edge of the flap, wherein said edge on the flap borders on a forwardly protruding edge on a front portion of the housing, wherein said hinge connection comprises a first axis of rotation about which the hinge connection is rotatably mounted relative to the housing; and a second axis of rotation that is parallel with and arranged at a distance from the first axis of rotation, and about which the flap is rotatably mounted, a spring element being provided that seeks to keep the flap closed towards the housing (DE-C-4125509).

Such electrical mounting element in the form of a power tap is known that comprises a housing with an annularly extending, forwardly protruding flange and a hinged flap that will, when closed, be located completely within this flange. The hinge connection comprises a rod that extends from the one side of the housing to the other, wherein it is - to both sides - journalled in an aperture in the flange at the upper end of the housing. This mounting forms the above-mentioned first axis of rotation. In an area between the two sides of the housing, the rod is offset, and the flap is mounted rotatably about this offset portion of the rod that thereby constitutes the above-mentioned second axis of rotation. In this prior art device a coil spring is mounted around that part of the rod that coincides with the first axis of rotation, the one end of the coil spring cooperating with the flap to keep it closed relative to the housing.

When closed, the flap is - as mentioned - located within the forwardly protruding flange of the housing, and the flap and the housing are configured such relative to each other that the upper end of the flap continues to be - when the flap is opened - located within the forwardly protruding flange of the housing. The upper and front edge of the flap is displaced by opening of the flap down below the level for the forwardly protruding flange, and to allow this shifting the upper and front edge is rounded. However, this also means that it is necessary to maintain a certain distance between the forwardly protruding flange of the housing and the upper edge of the flap to ensure free passage of these parts by each other when the flap is opened. When the flap is closed there will also be a considerably visible crevice between the flap and the housing, and likewise there will be a difference in level between the front of the flap and the front of the forwardly protruding flange of the housing.

Finally it should be mentioned that in this prior art device the flap is located within the forwardly protruding flange of the housing in normal circumstances, said coil spring holding the flap in this position. It is possible, however, to open the flap and lift it outwards against the action of the spring force, whereby the hinge connection is caused to occupy a position in which the flap misses the flange of the housing and can be shifted sideways relative to the housing. When the flap is shifted sideways the rod is also shifted sideways until it releases its engagement with the flange of the housing, following which the flap along with the hinge connection can be removed. The option of dismounting the flap in this manner involves a risk that the flap is removed by non-authorised persons and that the hinge connection or parts thereof are lost and are to be replaced by new parts.

It is the object of the invention to provide an electrical mounting part of the type mentioned in the introductory part provided with a flap that is, when closed, fully integrated in the front of the housing without distinct distance between the front of the flap and the front of the housing.

This is obtained by configuring the electrical mounting part of the above-mentioned type such that the front of the flap is, at the hinged edge, substantially level with and closely abutting on the front of the front portion of the housing at the forwardly protruding edge, and that the housing and the flap are configured with means that will, upon opening of the flap, cause the hinged edge, following an initial opening, to be shifted outwards relative to the housing.

Hereby it is obtained that, at least at its hinged edge, the flap is fully integrated with the housing, and the hinged edge of the flap being situated in close abutment on the forwardly protruding edge of the housing, there will only be a small visible crevice between the two parts. When the flap is opened the outwards shifting thereof will cause the hinged edge to freely pass past the forwardly protruding edge of the housing.

According to a preferred embodiment, the means that cause the outwards shifting of the flap when opened are backwardly extending pins provided at the hinged edge of the flap, which backwardly extending pins cooperate with surfaces of the housing when the flap is opened. The surfaces with which the backwardly extending pins cooperate are preferably configured as groove-guides, such that they control the backwardly oriented pins against lateral displacement.

According to a particularly advantageous embodiment, the backwardly oriented taps extend below the front part of the housing at the hinged edge when the flap is closed. Hereby it is possible to construct the flap as well as the front portion of the housing as very flat units such that the electrical mounting element as a whole can be made with a very flat configuration. Additionally this construction prevents the hinged edge of the flap from being unintentionally lifted outwards with an ensuing risk of damaging the electrical mounting element.

In order to prevent the flap from being removed from the housing, the backwardly extending pins cooperate with protrusions provided in the housing in such a manner that the flap cannot be displaced transversally to the hinge connection, irrespective of the position occupied by the hinge connection. According to a preferred embodiment the flap features one backwardly extending pin to each side of the hinge connection, the backwardly oriented pin being situated immediately within an outer edge of the housing. In this way it is ensured, in a simple manner, that the flap cannot be displaced transversally to the hinge connection.

Preferably the hinge connection comprises a rod having a central portion that is displaced relative to its ends, the central portion defining the first axis of rotation and the ends defining the second axis of rotation. Hereby the hinge connection can be manufactured in a simple manner, both axes of rotation being defined by the same shaped rod.

Preferably the central portion of the rod is rotatably journalled within the housing, it being urged down between resilient tongues provided within the housing, whereas its ends are rotatably journalled in the flaps, as they extend into guides provided on the rear side of the flap. Such configuration of the electrical mounting element permits that the rod is firstly mounted on the flap, following which the central portion of the rod can be snapped behind the resilient tongues that are configured within the housing.

The spring element that seeks to keep the flap closed towards the housing preferably comprises a coil spring located about the second axis of rotation, it having a first end with a holding pin that is in firm engagement with the flap and another end that constitutes a hold-on means that is in engagement with the housing.

According to the preferred embodiment the hinged edge is constituted of the upper edge of the flap. Once open, the flap will thus form a shielding protrusion for the functional interior of the electrical mounting element.

The invention will now be explained in further detail with reference to the drawing, wherein
Figure 1 shows an electrical mounting element in the form of a power tap according to the invention with an open flap;
Figure 2 shows the power tap shown in Figure 1 in disassembled state; and
Figures 3a-3c show a cross-sectional view through the power tap with the flap in three different positions.

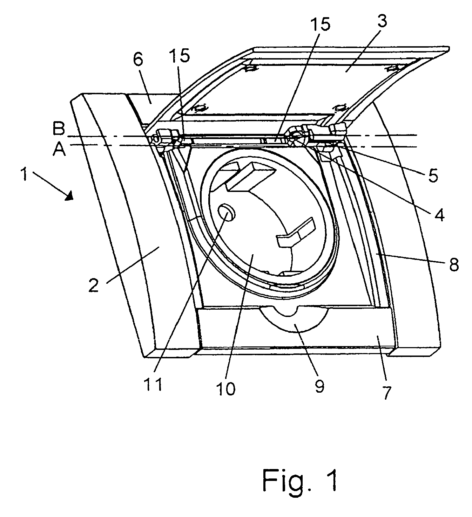

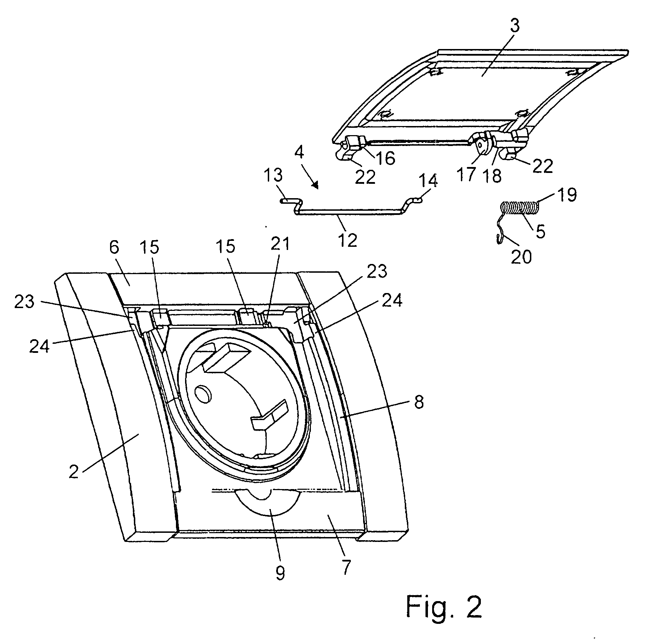

Now, Figure 1 shows a power tap 1 according to the invention. The power tap 1 comprises a housing 2 and a flap 3 that is hingedly connected to the housing 2. The hinge connection comprises a rod 4 and a spring 5. The power outlet 1 is shown disassembled in Figure 2 from where the configuration of the various parts will appear more clearly. In the embodiment shown the hinge connection is located at the upper edge of the flap 3. However, it should be noted that the invention lends itself to similar application if the hinge connection is located at a side edge or lower edge of the flap 3.

The housing 2 has an upper front portion 6 and a lower front portion 7 and a front portion 8 that is situated between these front portions and lowered in relation thereto. The lowered front portion 8 has a depth that corresponds to the depth of the flap 3. All front parts 6, 7, 8 as well as the flap 3 has an arched surface whereby the power tap 1 exhibits an even, but arched surface when the flap 3 is closed. In order to enable opening of the flap 3, a recess 9 is provided in the lower front portion 7 of the housing 2, such that a finger can be inserted below the lower edge of the flap 3 and thus seize there behind.

Centrally in the lowered front portion 8 of the housing 2, a circular lowered portion 10 is provided that has openings 11 for receiving a legged plug that fits into the openings 11. This part of the power tap 1 is commonly known and is not as such a part of the invention. Thus, the lowered portion may have another configuration and its openings 11 may have another configuration than the one shown. This part of the power tap 1 will not be described more detailed herein.

As mentioned, the hinge connection comprises a rod 4 that is configured as shown in Figure 2, ie with a central portion 12 that is displaced relative to the ends 13,14 of the rod. The central portion 12 of the rod 4 is mounted in the housing 2, it being pressed down behind resilient tongues 15 that withhold this part of the rod 4 in a rotatable manner. In this manner, this central portion 12 of the rod 4 defines a first axis of rotation A for the hinge connection.

The ends 13,14 of the rod 4 are mounted in guides 16,17 intended therefor that are provided to be protruding from the rear side of the flap 3. This mounting of the ends 13,14 defines a second axis of rotation B for the hinge connection.

When the power tap 1 is assembled, the spring 5 and the rod 4 are first mounted in the flap, following which these parts are mounted within the housing 2.

The spring 5 is mounted by being positioned in a spring recess 18 intended therefor in the rear side of the flap 3. The spring 5 has a first end that is provided with a holding pin 19 that is caused to be in engagement with an opening provided in the spring recess 18 (not shown), such that it is secured against rotation. The other end of the spring constitutes a hold-on means 20 that is, following mounting of the flap 3, caused to abut on the rear side of the housing 2 via an opening 21.

The ends 13,14 of the rod 4 have different lengths, and the guides 16,17 are positioned such that the rod 4 can be mounted first by conveying the end 13 as far as possible into the guide 16, following which the end 14 can be aligned with the guide 17. The rod 4 is then shifted backwards, such that the end 14 is displaced into the guide 17.

When the spring 5 and the rod 4 are mounted in the flap 3, the latter is ready for mounting within the housing 2, which is accomplished by initially making sure that the hold-on means 20 of the spring 5 extends through the opening 21, following which the central part 12 of the rod 4 is urged down below resilient tongues 15 that withhold this part of the rod 4 in a rotatable manner.

At its hinged upper edge, the flap 3 is provided with backwardly oriented pins 22 that are, upon opening of the flap, displaced along a groove 23 provided in the lowered front part 8 of the housing. The pins 22 and the grooves 23 are configured such that the pins 22 are unable to extend beyond the outer edge 24 of the housing 2, irrespective of the position of the hinge connection.

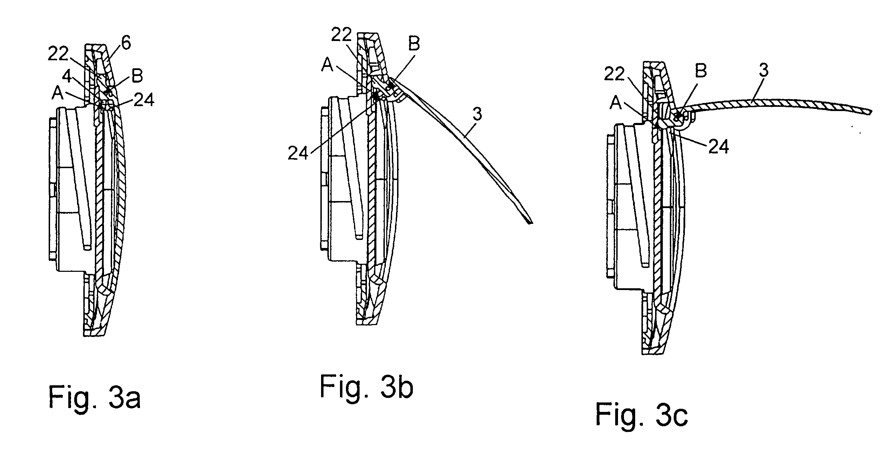

This is shown in further detail in Figures 3a-3c that show a cross-section taken immediately within the outer edge 24 of the housing 2 with the flap 3 in three different positions.

In Figure 3a the flap 3 is shown in a closed position, while it also abuts on the lowered part 8 of the housing 2 and thus also on the outer edge of the housing 2 that is, for the sake of clarity, shown in dotted lines.

It will appear how the rod 4 of the hinge connection extends from the mounting in the housing 2 to the guide 16 provided in a backwardly oriented part of the flap 3, viz from the first axis of rotation A to the second axis of rotation B. The spring 5, which is not shown in Figures 3a-3c, urges the rod 4 to rotate anticlockwise about the first axis of rotation A, which causes the flap 3 to be closed. It will appear that the backwardly oriented pins 22 extend down below the upper front portion 6 when the flap 3 is closed.

In Figure 3b the flap 3 is shown in its partially open state, and it is noted how the backwardly oriented pins 22 slide towards the grooves 23 provided within the housing 2, while simultaneously the rod 4 is set out to rotate clockwise about the first axis of rotation A. It will also appear how the upper edge of the flap 3 will, following initial opening of the flap 3, be displaced outwards relative to the housing 2, which is due to the particular configuration of the backwardly oriented pins 22 and the grooves 23 with which they cooperate.

Figure 3c shows the flap in a completely open position, and it is noted that the backwardly oriented pins 22 are still in abutment on the grooves 23, whereas the rod 10 has performed a further rotation about the first axis of rotation A.

As will appear from Figure 3a the upper edge of the flap 3 is level with and closely abutting on the front of the upper front portion 6 of the housing when the flap 3 is closed. Figure 3b shows that the upper edge of the flap 3 is, following initial opening, shifted outwards, which means exactly that the upper edge of the flap 3 and/or the abutting edge of front portion 6 of the housing 2 can be configured with sharp edges, such that they can, when the flap 3 is closed, be positioned very close to each other with only a tiny line to indicate that there are two elements.

It is also a common feature of the three positions shown in Figures 3a-3c that, in neither of the positions, will the flap 3 be able to be displaced transversally to the hinge connection since, in the shown positions, the backwardly oriented pins 22 - as well as all other possible positions for the flap 3 - will always be situated between the outer edges 23 of the housing 2. In this manner it is ensured that the flap 3 cannot be dismounted once it is mounted.

The invention was described with reference to a preferred embodiment. However, an electrical mounting element can be configured otherwise without therefore departing from the scope of the claims. For instance, the cooperating protrusions may consist of a centrally arranged, backwardly oriented pin on the flap that is in engagement with an also centrally located groove or indentation provided in the housing. Also the spring element may consist of other than a coil spring, and equally it can be mounted in a different manner. Finally the hinge connection can be constructed from more parts than merely one single shaped rod.

## Claims

1. An electrical mounting element, such as a switch, a power tap (1) or a communication tap, comprising a housing (2) and a flap (3) that is connected to the housing (2) via a hinge connection at an edge of the flap (3), wherein this edge of the flap (3) borders on a forwardly protruding edge on an upper front portion (6) of the housing (2), which hinge connection comprises a first axis of rotation (A), about which the hinge connection is rotatably mounted relative to the housing (2); and a second axis of rotation (B) that is parallel with and arranged at a distance from the first axis of rotation (A) and about which the flap (3) is rotatably mounted, there being provided a spring element that seeks to keep the flap (3) closed towards the housing (2), **characterised in that** the front of the flap (3) is, at its hinged edge, substantially level with and closely abutting on the front of the front portion (6) of the housing at the forwardly protruding edge; and that the housing (2) and the flap (3) are configured with means that will, upon opening of the flap (3), cause the hinged edge, following an initial opening, to be displaced outwards relative to the housing (2).

2. An electrical mounting element according to claim 1, **characterised in that** said means comprise backwardly oriented pins (22) provided at the hinged edges of the flap (3), which backwardly oriented pins (22) cooperate with surfaces of the housing (2) when the flap (3) is opened.

3. An electrical mounting element according to claim 2, **characterised in that** the surfaces with which the backwardly oriented pins (22) cooperate are configured as groove guides (23).

4. An electrical mounting element according to claim 2 or 3, **characterised in that** the backwardly oriented pins (22) extend below the front portion (6) of the housing by a hinged edge when the flap (3) is closed.

5. An electrical mounting element according to any one of claims 2-4, **characterised in that** the backwardly oriented pins (22) cooperate with protrusions provided within the housing (2) for preventing that the flap (3) can be displaced transversally to the hinge connection irrespective of which position the hinge connection occupies.

6. An electrical mounting element according to claim 5, **characterised in that** one backwardly oriented pin (22) is provided at each side of the hinge connection, wherein said backwardly oriented pin (22) is situated immediately within an outer edge (24) of the housing (2).

7. An electrical mounting element according to any one of claims 1-6, **characterised in that** the hinge connection comprises a rod (4) that has a central portion (12) that is displaced relative to its ends (13,14), wherein the central portion (12) defines the first axis of rotation (A) and the ends (13,14) define the second axis of rotation (B).

8. An electrical mounting element according to claim 7, **characterised in that** the central portion (12) of the rod (4) is rotatably journalled in the housing (2), it being pressed down behind resilient tongues (15) provided in the housing (2).

9. An electrical mounting element according to claim 7 or 8, **characterised in that** the ends of the rod (4) are rotatably journalled in the flap (3) as they extend into guides (16,17) provided on the rear side of the flap (3).

10. An electrical mounting element according to any one of claims 1-9 **characterised in that** the spring element comprises a coil spring (5) that is located about the second axis of rotation (B), it having a first end with a holding pin (19) that is in firm engagement with the flap (3), and a second end that constitutes a hold-on (20) that is in engagement with the housing (2).

11. An electrical mounting element according to any one of claims 1-10, **characterised in that** the hinged edge is constituted by the upper edge of the flap.

## Patentansprüche

1. Elektrisches Montageelement wie ein Schalter, ein Stromabgriff (1) oder ein Kommunikationsabgriff mit einem Gehäuse (2) und einer Klappe (3), die über eine Scharnierverbindung an einer Kante der Klappe (3) mit dem Gehäuse (2) verbunden ist, worin diese Kante der Klappe (3) an eine nach vorn ragende Kante auf einem oberen Stirnabschnitt (6) des Gehäuses (2) angrenzt, und wo die Scharnierverbindung eine erste Drehachse (A) umfasst, an der die Scharnierverbindung bezüglich des Gehäuses (2) drehbar montiert ist, sowie eine zweite Drehachse (B), die parallel zur ersten Drehachse (A) von dieser beabstandet angeordnet ist und an der die Klappe (3) drehbar montiert ist, wobei ein Federelement vorgesehen ist, das die Klappe (3) zum Gehäuse (2) hin geschlossen zu halten sucht, **dadurch gekennzeichnet, dass** die Vorderseite der Klappe (3) an ihrer am Scharnier aufgehängten Kante im Wesentlichen auf der gleichen Höhe mit der Vorderseite des Stirnabschnitts (6) des Gehäuses an der nach vorn ragenden Kante liegt und daran eng anliegt; und dass das Gehäuse (2) und die Klappe (3) mit Mitteln gestaltet sind, die beim Öffnen der Klappe (3) bewirken, dass die am Scharnier aufgehängte Kante nach einem anfänglichen Öffnen bezüglich des Gehäuses (2) nach aussen verschoben wird.

2. Elektrisches Montageelement nach Anspruch 1, **dadurch gekennzeichnet, dass** die Mittel rückwärts gerichtete Stifte (22) umfassen, die an den am Scharnier aufgehängten Kanten der Klappe (3) angebracht sind, wobei diese rückwärts gerichteten Stifte (22) mit Oberflächen des Gehäuses (2) zusammenwirken, wenn die Klappe (3) geöffnet wird.

3. Elektrisches Montageelement nach Anspruch 2, **dadurch gekennzeichnet, dass** die Oberflächen, mit denen die rückwärts gerichteten Stifte (22) zusammenwirken, als Führungsrillen (23) gestaltet sind.

4. Elektrisches Montageelement nach Anspruch 2 oder 3, **dadurch gekennzeichnet, dass** sich die rückwärts gerichteten Stifte (22) unter dem Stirnabschnitt (6) des Gehäuses um eine am Scharnier aufgehängte Kante vorstrecken, wenn die Klappe (3) geschlossen ist.

5. Elektrisches Montageelement nach einem der Ansprüche 2 bis 4, **dadurch gekennzeichnet, dass** die rückwärts gerichteten Stifte (22) mit Vorsprüngen zusammenwirken, die innerhalb des Gehäuses (2) angebracht sind, um zu verhindern, dass die Klappe (3) quer zur Scharnierverbindung verschoben wird, und zwar unabhängig von der Position, die die Scharnierverbindung einnimmt.

6. Elektrisches Montageelement nach Anspruch 5, **dadurch gekennzeichnet, dass** auf jeder Seite der Scharnierverbindung je ein rückwärts gerichteter Stift (22) angebracht ist, wobei sich der rückwärts gerichtete Stift (22) unmittelbar innerhalb einer Aussenkante (24) des Gehäuses (2) befindet.

7. Elektrisches Montageelement nach einem der Ansprüche 1 bis 6, **dadurch gekennzeichnet, dass** die Scharnierverbindung einen Stab (4) umfasst, der einen mittleren Abschnitt (12) besitzt, der gegenüber seinen Enden (13, 14) versetzt ist, wobei der mittlere Abschnitt (12) die erste Drehachse (A) und die Enden (13, 14) die zweite Drehachse (B) definieren.

8. Elektrisches Montageelement nach Anspruch 7, **dadurch gekennzeichnet, dass** der mittlere Abschnitt (12) des Stabes (4) drehbar im Gehäuse (2) gelagert ist, wobei er hinter federnde Zungen (15) hinabgedrückt wird, die im Gehäuse (2) angebracht sind.

9. Elektrisches Montageelement nach Anspruch 7 oder 8, **dadurch gekennzeichnet, dass** die Enden des Stabes (4) drehbar in der Klappe (3) gelagert sind, während sie sich in Führungen (16, 17) erstrecken, die an der Rückseite der Klappe (3) angebracht sind.

10. Elektrisches Montageelement nach einem der Ansprüche 1 bis 9, **dadurch gekennzeichnet, dass** das Federelement eine Spiralfeder (5) umfasst, die um die zweite Drehachse (B) herum gelagert ist, wobei sie ein erstes Ende mit einem Haltestift (19) besitzt, der im festen Eingriff mit der Klappe (3) steht, sowie ein zweites Ende, das einen Griff (20) darstellt, der mit dem Gehäuse (2) im Eingriff steht.

11. Elektrisches Montageelement nach einem der Ansprüche 1 bis 10, **dadurch gekennzeichnet, dass** die am Scharnier aufgehängte Kante aus der oberen Kante der Klappe besteht.

## Revendications

1. Elément de montage électrique, tel qu'un commutateur, une prise de courant (1) ou une prise de communication, comprenant un boîtier (2) et un volet (3) qui est relié au boîtier (2) via une connexion articulée au niveau d'un bord du volet (3), dans lequel ce bord du volet (3) touche un bord faisant saillie vers l'avant sur une partie avant supérieure (6) du boîtier (2), laquelle connexion articulée comprend un premier axe de rotation (A), autour duquel la connexion articulée est montée de manière rotative par rapport au boîtier (2) ; et un second axe de rotation (B) qui est parallèle au premier axe de rotation (A), et agencé à une distance de celui-ci, et autour duquel le volet (3) est monté de manière rotative, un élément formant ressort y étant agencé, qui cherche à maintenir le volet (3) fermé vers le boîtier (2), **caractérisé en ce que** l'avant du volet (3) est, au niveau de son bord articulé, sensiblement à la hauteur de l'avant de la partie avant (6) du boîtier au niveau du bord faisant saillie vers l'avant, et venant étroitement en butée sur celui-ci ; et **en ce que** le boîtier (2) et le volet (3) sont configurés avec des moyens qui, durant l'ouverture du volet (3), amèneront le bord articulé, suite à une ouverture initiale, à être déplacé vers l'extérieur par rapport au boîtier (2).

2. Elément de montage électrique selon la revendication 1, **caractérisé en ce que** lesdits moyens comprennent des broches orientées vers l'arrière (22) agencées au niveau des bords articulés du volet (3), lesquelles broches orientées vers l'arrière (22) coopèrent avec des surfaces du boîtier (2) lorsque le volet (3) est ouvert.

3. Elément de montage électrique selon la revendication 2, **caractérisé en ce que** les surfaces avec lesquelles les broches orientées vers l'arrière (22) coopèrent sont configurées en tant que guides formant gorge (23).

4. Elément de montage électrique selon la revendication 2 ou 3, **caractérisé en ce que** les broches orientées vers l'arrière (22) s'étendent en dessous de la partie avant (6) du boîtier par l'intermédiaire d'un bord articulé lorsque le volet (3) est fermé.

5. Elément de montage électrique selon l'une quelconque des revendications 2 à 4, **caractérisé en ce que** les broches orientées vers l'arrière (22) coopèrent avec des saillies fournies dans le boîtier (2) pour empêcher que le volet (3) puisse être déplacé de manière transversale par rapport à la connexion articulée quelle que soit la position que la connexion articulée occupe.

6. Elément de montage électrique selon la revendication 5, **caractérisé en ce qu'**une broche orientée vers l'arrière (22) est agencée de chaque côté de la connexion articulée, dans lequel ladite broche orientée vers l'arrière (22) est située immédiatement dans un bord extérieur (24) du boîtier (2).

7. Elément de montage électrique selon l'une quelconque des revendications 1 à 6, **caractérisé en ce que** la connexion articulée comprend une tige (4) qui a une partie centrale (12) qui est déplacée par rapport à ses extrémités (13, 14), dans lequel la partie centrale (12) définit le premier axe de rotation (A), et les extrémités (13, 14) définissent le second axe de rotation (B).

8. Elément de montage électrique selon la revendication 7, **caractérisé en ce que** la partie centrale (12) de la tige (4) est tourillonnée de manière rotative dans le boîtier (2), celle-ci étant comprimée vers le bas derrière des languettes élastiques (15) agencées dans le boîtier (2).

9. Elément de montage électrique selon la revendication 7 ou 8, **caractérisé en ce que** les extrémités de la tige (4) sont tourillonnées de manière rotative dans le volet (3) lorsqu'elles s'étendent dans des guides (16, 17) agencés sur le côté arrière du volet (3).

10. Elément de montage électrique selon l'une quelconque des revendications 1 à 9, **caractérisé en ce que** l'élément formant ressort comprend un ressort hélicoïdal (5) qui est situé autour du second axe de rotation (B), celui-ci ayant une première extrémité munie d'une broche de maintien (19) qui est en prise serrée avec le volet (3), et une seconde extrémité qui constitue un support (20) qui est en prise avec le boîtier (2).

11. Elément de montage électrique selon l'une quelconque des revendications 1 à 10, **caractérisé en ce que** le bord articulé est constitué du bord supérieur du volet.
